# EUROPÄISCHE PATENTSCHRIFT

(11) **EP 0 744 114 B1**
(45) Veröffentlichungstag und Bekanntmachung des Hinweises auf die Patenterteilung: **28.04.2004**
(21) Anmeldenummer: 95940137.3
(22) Anmeldetag: 06.12.1995
(51) Int. Cl.: H04Q 7/24

(54) **VERFAHREN ZUR ÜBERTRAGUNG VON CODIERTEN SPRACHSIGNALEN IN MINDESTENS EINEM TELEKOMMUNIKATIONSNETZ**
PROCESS FOR TRANSMITTING CODED VOICE SIGNALS IN AT LEAST ONE TELECOMMUNICATION NETWORK
PROCEDE DE TRANSMISSION DE SIGNAUX VOCAUX CODES DANS AU MOINS UN RESEAU DE TELECOMMUNICATIONS

(30) Priorität: 07.12.1994 DE 4443575
(43) Veröffentlichungstag der Anmeldung: 27.11.1996
(73) Patentinhaber: T-Mobile Deutschland GmbH, 53227 Bonn (DE)
(72) Erfinder: SALEM, Tarek, D-53227 Bonn (DE)
(74) Vertreter: Riebling, Peter, Dr.-Ing.
(86) Internationale Anmeldenummer: PCT/DE1995/001734
(87) Internationale Veröffentlichungsnummer: WO 1996/018272

(56) Entgegenhaltungen:
- EP-A- 0 605 311
- WO-A-91/15087
- WO-A-93/00778
- US-A- 4 782 326
- 41ST IEEE VEHICULAR TECHNOLOGY CONFERENCE. GATEWAY TO THE FUTURE TECHNOLOGY IN MOTION (CAT. NO.91CH2944-7), ST. LOUIS, MO, USA, 19-22 MAY 1991, ISBN 0-87942-582-2, 1991, NEW YORK, NY, USA, IEEE, USA, Seiten 326-332, XP000260200 PAUTET M -B ET AL: "GSM protocol architecture: radio sub-system signalling"
- IEEE TRANSACTIONS ON COMMUNICATIONS, FEB. 1992, USA, Bd. 40, Nr. 2, ISSN 0090-6778, Seiten 397-403, XP000274975 AYANOGLU E ET AL: "Tandem transcoding without distortion accumulation for vector quantization"

## Beschreibung

Die Erfindung betrifft ein Verfahren zur Übertragung von codierten Sprachsignalen in mindestens einem Telekommunikationsnetz, gemäss den Merkmalen des Oberbegriffs des Patentanspruchs 1.

Zur Übertragung von Sprachsignalen werden in Telekommunikationsnetzen häufig Sprachcodierungsalgorithmen (Codes) verwendet, um die für die Sprachübertragung nötige Datenrate zu verringern, beispielsweise Codes nach CCITT G.728 und G.721. An Netzübergängen sind Sprachsignale im PCM-Format mit einer Datenrate von 64 kbit/s üblich. Dadurch tritt häufig der Fall auf, daß auf einer Übertragungsstrecke zwischen zwei Endgeräten Sprachsignale mehrfach codiert und zwischendurch wieder durch Decodierung auf das PCM-Format gebracht werden.

In der WO-A-93/00778 wird vorgeschlagen, auf eine Konvertierung von auf einer Übertragungsstrecke zwischen zwei Endgeräten übertragenen codierten Sprachsignalen zu verzichten, wenn das empfangende Endgerät in der Lage ist, das codierte Sprachsignal des sendenden Endgeräts direkt zu rekonstruieren. In diesem Fall wird auf eine Decodierung, d.h. Wiederherstellung, des vollen Sprachsignals verzichtet. Es wird eine Signalisierung gesendet, welche eine Kennzeichnung des Sprachsignals beinhaltet. Die Art der Signalisierung ist nicht angegeben.

Aufgabe der vorliegenden Erfindung ist es, den durch die mehrfache Codierung und Decodierung entstehenden Qualitätsverlust zu verhindern und insbesondere ein Verfahren anzugeben, das für eine korrekte Übertragung, und gegebenenfalls Codierung und Decodierung der Sprachsignale auf der Übertragungsstrecke sorgt.

Die Aufgabe wird erfindungsgemäß durch die kennzeichnenden Merkmale des Patentanspruchs 1 gelöst.

Neben dem Vorteil, daß die Übertragungsqualität erhöht wird, weist die Erfindung einen weiteren Vorteil auf, daß nämlich keine mehrfache durch Codierung und Decodierung bedingte Verzögerung der Sprachsignale auftritt. Durch das erfindungsgemäße Verfahren wird sichergestellt, daß die Übertragung mit dem datenreduzierenden Code nur dann erfolgt, wenn die Kanäle höherer Datenrate Encoder und Decoder miteinander verbinden, welche für den gleichen Code ausgelegt sind.

Ein Anwendungsgebiet des erfindungsgemäßen Verfahrens sind Mobilfunknetze, bei denen die Sprachsignale zwischen den Mobilstationen und den Basisstationen und gegebenenfalls bis zu Mobilfunkvermittlungsstellen mit datenreduzierenden Codes übertragen werden, für die Übertragung innerhalb des Mobilfunknetzes jedoch PCM-Kanäle mit einer Datenrate von 64 kbit/s benutzt werden.

Insbesondere bei Mobilfunknetzen kann der zwischen einem Mobilfunkgerät und der Basisstation angewandte datenreduzierende Code sich im Laufe einer Verbindung ändern. Daher wird während des Bestehens der Verbindung geprüft, ob die datenreduzierenden Codes an den Enden der Kanäle höherer Datenrate gleich sind, wobei eine Umschaltung von Encodern und Decodern in Abhängigkeit vom Ergebnis der Prüfung erfolgt.

Eine weitere Anwendung des erfindungsgemäßen Verfahrens ist im Bereich von Netzübergängen zwischen nationalen Netzen möglich. Hierzu wird bei den bestehenden Netzen nach bzw. vor einer Übertragung mit datenreduzierenden Codes innerhalb des nationalen Netzes eine Decodierung bzw. Codierung vorgenommen. Diese können durch Anwendung des erfindungsgemäßen Verfahrens für diejenigen Signale entfallen, die ohnehin innerhalb des anderen Netzes mit dem gleichen Code übertragen werden.

Eine Anpassung an das jeweilige Telekommunikationsnetz und an die innerhalb des Kommunikationsnetzes verwendeten Codes erfolgt dadurch, daß die Übertragung über die Kanäle höherer Datenrate bei Gleichheit mit dem datenreduzierenden Code und bei Ungleichheit in decodierter Form erfolgt.

Eine Weiterbildung des erfindungsgemäßen Verfahrens ist in vorteilhafter Weise bei Netzübergängen dadurch anwendbar, daß die Übertragung der Sprachsignale zwischen dem Telekommunikationsnetz und einem weiteren Telekommunikationsnetz in den Kanälen höherer Datenrate in decodierter Form erfolgt.

Ausführungsbeispiele der Erfindung sind in der Zeichnung anhand mehrerer Figuren dargestellt und in der nachfolgenden Beschreibung näher erläutert. Es zeigt:
- Fig. 1: ein Ausführungsbeispiel als schematische Darstellung von Teilen eines Mobilfunknetzes.
- Fig. 2: eine schematische Darstellung von Teilen eines bekannten Mobilfunknetzes und
- Fig. 3: eine Anordnung zur Durchführung des erfindungsgemäßen Verfahrens innerhalb eines Mobilfunknetzes.

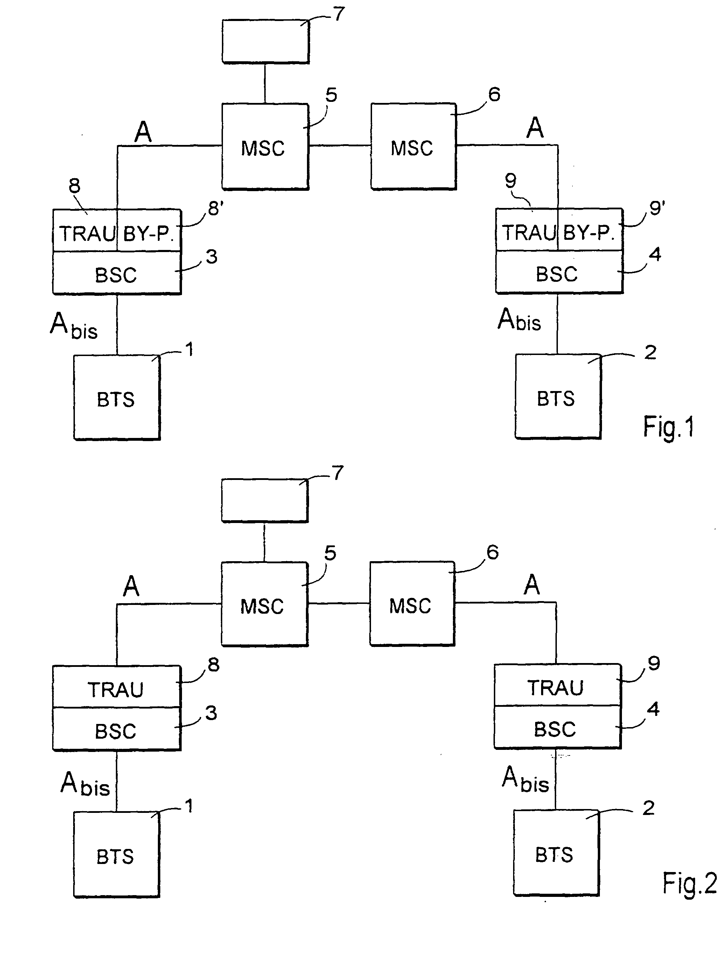

Gleiche Teile sind in den Figuren mit gleichen Bezugszeichen versehen. In den Figuren 1 und 2 sind die dargestellten Komponenten des Mobilfunknetzes mit den Kurzbezeichnungen versehen, die in den für GSM einschlägigen Normen festgelegt sind.

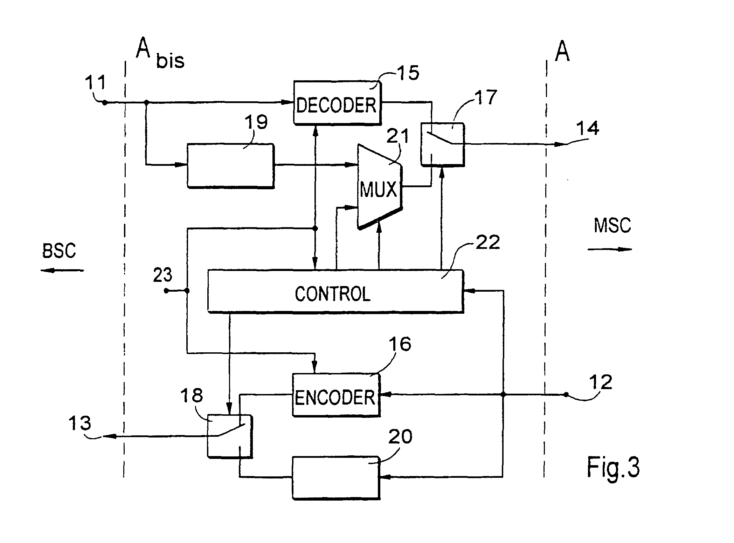

Das Ausführungsbeispiel sowie Teile davon sind zwar als Blockschaltbilder dargestellt. Dieses bedeutet jedoch nicht, daß die in Fig. 3 dargestellte Anordnung auf eine Realisierung mit Hilfe von einzelnen den Blöcken entsprechenden Schaltungen beschränkt ist. Die Anordnung ist vielmehr in besonders vorteilhafter Weise mit Hilfe von hochintegrierten Schaltungen realisierbar. Dabei kann ein digitaler Signalprozessor eingesetzt werden, der bei geeigneter Programmierung die in dem Blockschaltbild dargestellten Funktionen durchführt.

Bei dem in Fig. 2 dargestellten bekannten Mobilfunknetz werden zwischen Basisstationen 1, 2 die Sprachsignale wie folgt übertragen. Zwischen jeweils einer Basisstation 1, 2 und jeweils einem dieser zugeordneten Basisstations-Controller 3, 4 erfolgt die Übertragung der Sprachsignale mit einer Datenrate von 13 kbit/s gemäß der Schnittstellennorm A_{bis}. Zur Erzielung dieser geringen Datenrate werden die Sprachsignale datenreduzierend codiert, womit ein geringer Qualitätsverlust verbunden ist.

Im weiteren Bereich des Mobilfunknetzes, insbesondere zur Übertragung der Sprachsignale zwischen den Mobilfunk-Vermittlungsstellen 5, 6 sind Kanäle mit einer Datenrate von 64 kbit/s gemäß der Schnittstellennorm A vorgesehen ohne eine datenreduzierende Quellcodierung, so daß hier lediglich PCM-Signale übertragen werden. Das gleiche gilt auch für einen Übergang 7 zu einem Festnetzwerk.

Die von der Basisstation 1 zum Basisstations-Controller übertragenen Sprachsignale werden zur weiteren Übertragung über eine Transcodier- und Datenratenadaptionseinheit 8 geleitet. Dort wird die zur Übertragung zum Basisstations-Controller vorgenommene Codierung mit Hilfe eines entsprechenden Decoders wieder aufgehoben. Die decodierten Sprachsignale werden dann mit einer Datenrate von 64 kbit/s bis zu einer Transcodier- und Datenratenadaptionseinheit 9 übertragen, welche dem Basisstations-Controller 4 zugeordnet ist. Dort erfolgt wieder eine Decodierung zur Anpassung an die A_{bis}-Schnittstelle und zur Übertragung an die Basisstation 2. Die Transcodier- und Datenratenadaptionseinheiten 8, 9 sind zwar logisch den Basisstations-Controllern 3, 4 zugeordnet, werden jedoch örtlich meistens in den Mobilfunk-Vermittlungsstellen angeordnet, um Leistungskosten zu sparen.

Die in dem Beispiel nach Fig. 2 auftretende zusätzliche Decodierung und Codierung bedeutet bereits eine Verschlechterung der Qualität. Es kann jedoch in komplexeren Netzen oder in mehreren Netzen durchaus zu einer noch häufigeren Decodierung und abermaligen Codierung kommen. Um dieses zu verhindern, wird bei der Anordnung zur Durchführung des erfindungsgemäßen Verfahrens nach Fig. 1 die Transcodier- und Datenratenadaptionseinheit 8 durch einen By-Paß 8' umgangen, so daß die datenreduzierend codierten Sprachsignale ohne Decodierung in dem für 64 kbit/s ausgelegten Übertragungskanal gelangen. In entsprechender Weise ist auch die Transcodier- und Datenratenadaptionseinheit 9 mit einem By-Pass 9' überbrückt, so daß die datenreduzierend codierten Sprachsignale ohne weitere Codierung bis zur Basisstation 2 übertragen werden können.

Die By-Pässe 8', 9' können im Bedarfsfall (z.B. bei Verwendung von Discontinuous Transmission (DTX) oder auch zur Fehlerverdeckung) Manipulationen an den datenreduzierend codierten Sprachsignalen vornehmen. Die Datenrate wird dadurch jedoch nicht verändert.

Dieses einfache "Durchreichen" der codierten Sprachsignale setzt allerdings voraus, daß in den Basisstationen 1, 2 die Anwendung der gleichen Codieralgorithmen (Codes) erfolgt. Ist dieses nicht der Fall oder sollen die Sprachsignale über den Netzübergang 7 übertragen werden, so werden die Transcodier- und Datenratenadaptionseinheiten 8, 9 nicht überbrückt. Im Falle der Übertragung in ein anderes Netz stehen dann die international genormten PCM-Signale zur Verfügung. Ist jedoch das andere Netz auch in der Lage, Signale nach dem gleichen Code wie das dargestellte Netz zu verarbeiten, so kann in diesem Fall auch die jeweilige Transcodier- und Datenratenadaptionseinheit überbrückt werden.

Fig. 3 zeigt in Form eines Blockschaltbildes eine zur Durchführung des erfindungsgemäßen Verfahrens abgewandelte Transcodier- und Datenratenadaptionseinheit. Die in Fig. 3 dargestellte Anordnung weist jeweils einen Eingang 11, 12 und einen Ausgang 13, 14 für die Sprachsignale in beiden Richtungen auf. Der Eingang 11 und der Ausgang 13 bilden eine A_{bis}-Schnittstelle mit einer Datenrate für die Sprachsignale von 13 kbit/s im Falle eines Verkehrskanals mit voller Datenrate (TCH/FS) oder mit 5,6 kbit/s im Falle eines Verkehrskanals mit halber Datenrate (TCH/HS). Bei den bekannten Mobilfunknetzen werden die von der Basisstation eintreffenden Signale in einem Decoder 15 decodiert und mit einer Datenrate von 64 kbit/s über die A-Schnittstelle weitergeleitet. Die bei 12 von einer Mobilfunk-Vermittlungsstelle ankommenden Sprachsignale im PCM-Format werden über einen Encoder 16 geleitet und dort zu Sprachsignalen mit reduzierter Datenrate codiert und über den Ausgang 13 zur Basisstation geleitet. Dem Decoder 15 und dem Encoder 16 wird bei 23 eine Information zugeführt, welcher Code angewendet werden soll.

Zur Durchführung des erfindungsgemäßen Verfahrens sind die Ausgänge des Decoders 15 und des Encoders 16 mit je einem Umschalter 17, 18 verbunden, der in der dargestellten Stellung die decodierten bzw. codierten Signale weiterleitet. In der anderen Stellung schalten die Umschalter 17, 18 jeweils einen By-Paß ein, der den Decoder 15 bzw. den Encoder 16 umgeht. In diesen By-Pässen ist jeweils ein Zwischenspeicher 19, 20 vorgesehen zur Takt- und Phasenanpassung. Hier können auch Schaltungen für die oben im Zusammenhang mit den By-Pässen 8', 9' genannten Manipulationen vorgesehen sein.

Der nicht von den codierten Sprachsignalen eingenommene Teil des 64 kbit/s-Kanals kann für Signalisierungen benutzt werden, insbesondere für eine Signalisierung, welchem Code die codierten Sprachsignale zugrundeliegen. Diese Signalisierung wird mit Hilfe eines Multiplexers 21 in die Ausgangssignale des Zwischenspeichers 19 eingesetzt, bevor sie über den Umschalter 17 und den Ausgang 14 an eine Mobilfunk-Vermittlungsstelle weitergeleitet werden.

Die bei 12 von einer Mobilfunk-Vermittlungsstelle eintreffenden Signale enthalten eine diesbezügliche Signalisierung, wenn sie von einem geeigneten Encoder oder einer zur Durchführung des erfindungsgemäßen Verfahrens modifizierten Transcodier- und Datenratenadaptionseinheit stammen. Diese Signalisierung wird in einer Steuereinrichtung 22 mit der bei 23 zugeführten Information über den Code an der A_{bis}-Schnittstelle verglichen. Zeigen beide Signalisierungen, daß die Codierung an beiden Endpunkten gleich ist, werden die Umschalter 17, 18 von der Steuereinrichtung 22 in die nicht dargestellte Stellung gebracht bzw. dort gehalten. Der Decoder 15 und der Encoder 16 sind dann ausgeschaltet, so daß eine durch diese bedingte zusätzliche Qualitätsverminderung vermieden wird.

Beim Aufbau einer Verbindung befinden sich die Umschalter zunächst in der gezeichneten Stellung. In den Ausgangssignalen des Decoders 15 und des Decoders der anderen Transcodier- und Datenratenadaptionseinheit sind Signalisierungen über den Code enthalten, die in der Steuereinrichtung der jeweils anderen Transcodier- und Datenratenadaptionseinheit ausgewertet werden. Sind die Codes verschieden, verbleiben die Umschalter 17, 18 in der gezeichneten Stellung, so daß die Übertragung der Sprachsignale über die Kanäle höherer Datenrate in decodierter Form erfolgt. Sind die Codes jedoch gleich, werden die Umschalter 17, 18 in die andere Stellung gebracht. Die Übertragung über die Kanäle höherer Datenrate erfolgt dann mit dem datenreduzierenden Code.

Nach dem Umschalten wegen Gleichheit der Codes wird den über die 64 kbit/s-Kanäle geleiteten Signalen weiterhin über den Multiplexer 21 und einen entsprechenden Multiplexer auf der Gegenseite eine Signalisierung hinzugefügt, welche die Art der Codierung bezeichnet. Ändert sich die Signalisierung einseitig, weil beispielsweise eine der Basisstationen von voller auf eine halbe Datenrate umschaltet, so stellt die Steuereinrichtung 22 Ungleichheit fest und steuert die Umschalter 17, 18 in die in der Figur dargestellten Stellungen, so daß wieder decodierte Signale übertragen werden.

## Patentansprüche

1. Verfahren zur Übertragung von codierten Sprachsignalen in mindestens einem Telekommunikationsnetz, bei dem die Sprachsignale über Kanäle niedriger Datenrate (A_{bis}) mit einem datenreduzierenden Code und über Kanäle höherer Datenrate (A) in decodierter Form oder mit dem datenrduzierendem Code übertragen werden, wobei geprüft wird, ob die datenreduzierenden Codes an den Enden der Kanäle höherer Datenrate (A) gleich sind und für diesen Fall die Sprachsignale mit dem datenreduzierenden Code übertragen werden,
**dadurch gekennzeichnet,**
**daß** bei einer Datenübertragung mit datenreduzierendem Code in den Kanälen höherer Datenrate (A) zusätzlich eine Signalisierung im nicht von den codierten Sprachsignalen eingenommenen Teil übertragen wird, welche den datenreduzierenden Code **kennzeichnet** und zum Umschalten von Encodern (16) und Decodern (15) dient,
**daß** während des Bestehens der Verbindung geprüft wird, ob die datenreduzierenden Codes an den Enden der Kanäle höherer Datenrate (A) gleich sind, und daß die Umschaltung von Encodern (16) und Decodern (15) in Abhängigkeit vom Ergebnis der Prüfung erfolgt

2. Verfahren nach Anspruch 1, **dadurch gekennzeichnet, daß** die Übertragung über die Kanäle höherer Datenrate (A) bei Gleichheit mit dem datenreduzierenden Code und bei Ungleichheit in decodierter Form erfolgt.

3. Verfahren nach einem der vorhergehenden Ansprüche, **dadurch gekennzeichnet, daß** die Übertragung der Sprachsignale bei einem Netzübergang zwischen dem Telekommunikationsnetz und einem weiteren Telekommunikationsnetz in den Kanälen höherer Datenrate (A) in decodierter Form erfolgt.

## Claims

1. Method for transmitting coded speech signals in at least one telecommunications network, wherein the speech signals are transmitted via channels having a low data rate (A_{bis}) with a data-reducing code and via channels having a higher data rate (A) in decoded form or with the data-reducing code, a check being made to ascertain whether the data-reducing codes at the ends of the channels having a higher data rate (A) are the same, in which case the speech signals are transmitted with the data-reducing code, **characterized in that** when data are transmitted with the data-reducing code in the channels having a higher data rate (A) signals, that identify the data-reducing code and serve to switch encoders (16) and decoders (15), are additionally transmitted in the part not occupied by the coded speech signals, **in that** a check is made during the presence of the connection to ascertain whether the data-reducing codes at the ends of the channels having a higher data rate (A) are the same, and **in that** the encoders (16) and decoders (15) are switched in accordance with the outcome of this check.

2. Method according to Claim 1, **characterized in that** the transmission via the channels having a higher data rate (A) is made when parity with the data-reducing code occurs, and in decoded form when disparity with the data-reducing code occurs.

3. Method according to either of the preceding claims, **characterized in that** in the case of a network gateway between the telecommunications network and another telecommunications network, transmission of the speech signals in the channels having a higher data rate (A) is made in decoded form.

## Revendications

1. Procédé pour transmettre des signaux vocaux codés dans au moins un réseau de télécommunication, selon lequel les signaux vocaux sont transmis par des canaux à faible débit (A_{bis}) avec un code de réduction de données et par des canaux à plus haut débit (A) sous une forme décodée ou avec le code de réduction de données, étant précisé qu'on vérifie si les codes de réduction de données aux extrémités des canaux à haut débit (A) sont les mêmes, et que pour ce cas, les signaux vocaux sont transmis avec le code de réduction de données,
**caractérisé en ce que** lors d'une transmission de données avec le code de réduction de données dans les canaux à haut débit (A), on transmet en supplément une signalisation, dans la partie qui n'est pas occupée par les signaux vocaux codés, qui identifie le code de réduction de données et qui sert à la commutation de codeurs (16) et de décodeurs (15), **en ce que** pendant la communication, on vérifie si les codes de réduction de données aux extrémités des canaux à haut débit (A) sont les mêmes, et **en ce que** la commutation des codeurs (16) et des décodeurs (15) se fait en fonction du résultat de cette vérification.

2. Procédé selon la revendication 1, **caractérisé en ce que** la transmission par les canaux à haut débit (A) se fait avec le code de réduction de données, si c'est le même, et sous une forme décodée, si les codes de réduction de données ne sont pas les mêmes.

3. Procédé selon l'une des revendications précédentes, **caractérisé en ce que** la transmission des signaux vocaux lors du passage d'un réseau de télécommunication à un autre se fait dans les canaux à haut débit (A) sous une forme décodée.
